# EUROPÄISCHE PATENTSCHRIFT

(11) **EP 0 440 938 B1**
(45) Veröffentlichungstag und Bekanntmachung des Hinweises auf die Patenterteilung: **21.12.1994**
(21) Anmeldenummer: 90124291.7
(22) Anmeldetag: 18.01.1991
(51) Int. Cl.: C08K 5/54, C08L 69/00

(54) **Stabilisierung von hochwärmeformbeständigem Polycarbonat**
Stabilization of high-temperature deformation resistant polycarbonate
Stabilisation de polycarbonate résistante à la déformation à haute température

(30) Priorität: 06.02.1990 DE 4003438
(43) Veröffentlichungstag der Anmeldung: 14.08.1991
(73) Patentinhaber: BAYER AG, 51368 Leverkusen (DE)
(72) Erfinder: Meier, Helmut-Martin, Dr., W-4030 Ratingen 6 (DE); Westeppe, Uwe, Dr., W-4020 Mettmann (DE); Dhein, Rolf, Dr., W-4150 Krefeld 1 (DE); Freitag, Dieter, Dr., W-4150 Krefeld 1 (DE); Wandel, Martin, Dr., W-4047 Dormagen (DE); Sandquist, Axel, W-4019 Monheim (DE)

(56) Entgegenhaltungen:
- EP-A- 0 096 818
- EP-A- 0 166 834
- DE-A- 3 832 396
- US-A- 4 375 525

## Beschreibung

Gegenstand der deutschen Offenlegungsschrift 38 32 396 sind u.a. hochwärmeformbeständige, aromatische Polycarbonate mit Molekulargewichten M̅w (Gewichtsmittel) von mindestens 10.000, vorzugsweise von 10.000 bis 200.000 und insbesondere von 20.000 bis 80.000, die bifunktionelle Carbonatstruktureinheiten der Formel (Ia) 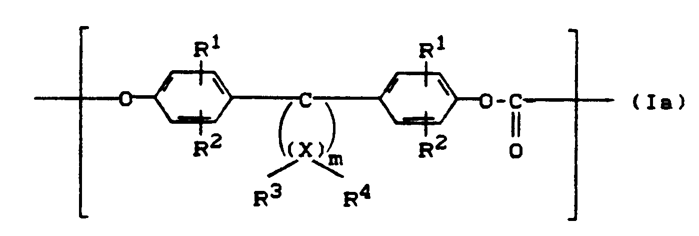
in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten, im Polycarbonat enthalten.

In der Formel (Ia) bedeuten:
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴,: für jedes X individuell wählbar, unabhängig voneinander Wasserstoff oder C₁-C₆-Alkyl und
- X: Kohlenstoff,

mit der Maßgabe, daß an mindestens einem Atom X R³ und R⁴ gleichzeitig Alkyl bedeuten.

Bevorzugt sind an 1 - 2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in β-Stellung zu C-1 bevorzugt. Insbesondere sind Struktureinheiten der Formel (Ia) die Reste von Dihydroxydiphenylcycloalkanen mit 5 und 6 Ring-C-Atomen im cycloaliphatischen Rest wie

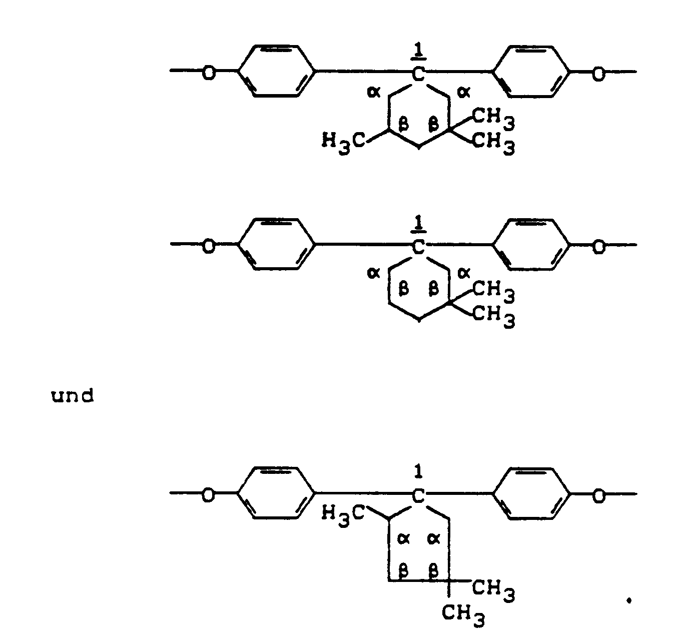

Diese Polycarbonate enthalten somit jeweils zu 100 Mol-% komplementäre Mengen an anderen difunktionellen Carbonatstuktureinheiten, beispielsweise solchen der Formel (VIIa) 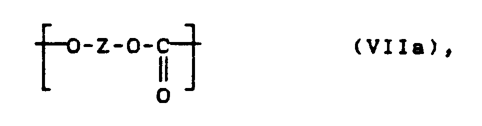
in denen
- Z: ein aromatischer Rest mit 6 - 30 C-Atomen ist,

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten, im Polycarbonat.

Bevorzugt sind Polycarbonate, in denen die Struktureinheiten der Formel (Ia) solche der Formel (Ic) sind 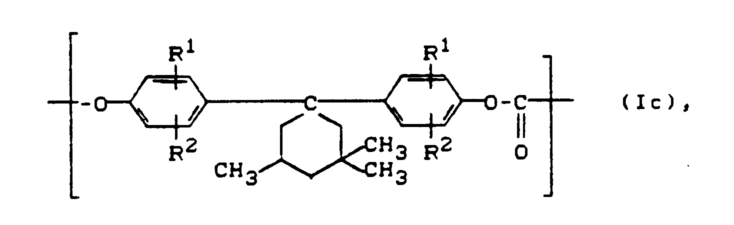
worin
- R¹ und R²: die für Formel (Ia) genannte Bedeutung haben, besonders bevorzugt aber Wasserstoff sind.

Es wurde gefunden, daß die Polycarbonate gemäß der deutschen Offenlegungsschrift 38 32 396 mit Oxetanylgruppen enthaltenden Siliciumverbindungen als alleinigem Stabilisator gegen thermischen Abbau mit guter Langzeitwirkung stabilisert werden können.

Gegenstand dieser Erfindung sind also hochwärmeformbeständige, aromatische Polycarbonate mit Molekulargewichten M̅w (Gewichtsmittel) von mindestens 10.000, vorzugsweise von 10.000 bis 200.000 und insbesondere von 20.000 bis 80.000, die bifunktionelle Carbonatstruktureinheiten der Formel (Ia) 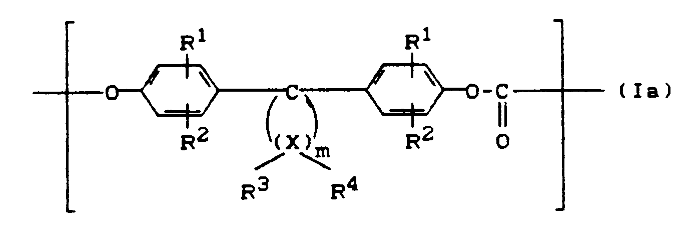
enthalten, worin
- R¹ und R²: unabhängig voneinander Wasserstoff, Halogen, C₁-C₈-Alkyl, C₅-C₆-Cycloalkyl, C₆-C₁₀-Aryl und C₇-C₁₂-Aralkyl,
- m: eine ganze Zahl von 4 bis 7,
- R³ und R⁴,: für jedes X individuell wählbar, unabhängig voneinander Wasserstoff, C₁-C₆-Alkyl und
- X: Kohlenstoff bedeuten,
mit der Maßgabe, daß an mindestens einem Atom X R³ und R⁴ gleichzeitig Alkyl bedeuten,
die 0,001 bis 1 Gew.-%, bevorzugt 0,01 bis 0,5 Gew.-% eines Siloxans der Formel (II) als alleinigen Thermostabilisator enthalten 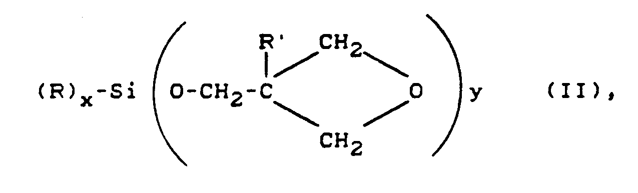
worin
- R und R': unabhängig voneinander C₁-C₄-Alkyl oder Aryl (Phenyl) und
- x und y: die Zahlen 1, 2 oder 3 bedeuten und x + y immer gleich 4 ist.

Geeignete Siloxane der Formel (II) sind z.B.:

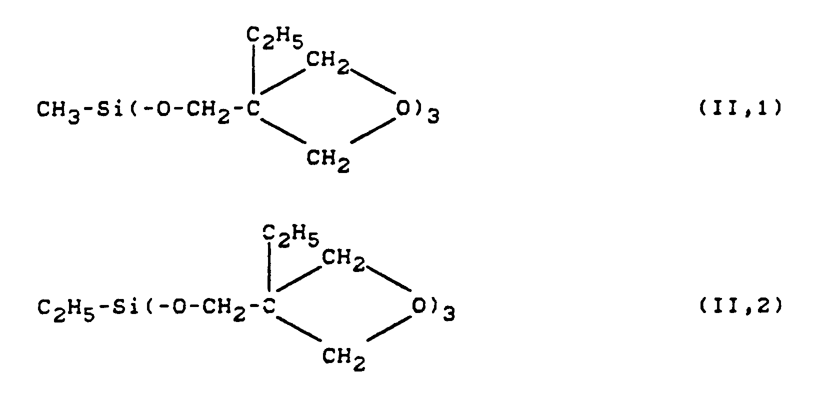

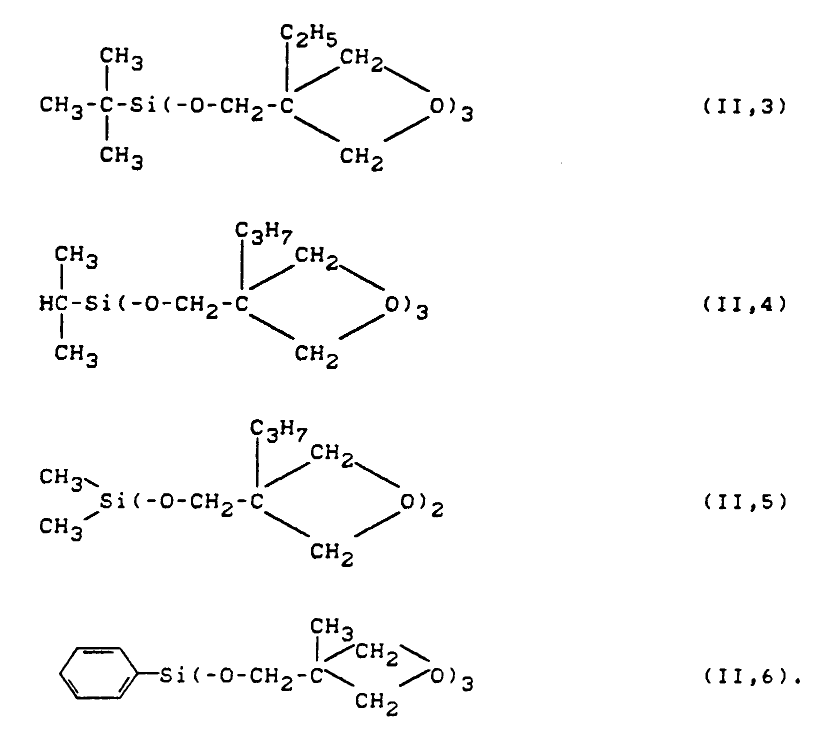

Siloxane der Formeln (II) sind bekannt oder nach bekannten Verfahren herstellbar, beispielsweise durch Umsetzung von Siliciumhalogeniden der Formel (IV)

RₓSi(Hal)_{y} (IV),

worin
- R, x und y: die für die Siloxane der Formel (II) genannte Bedeutung haben, und
- Hal: Halogen, beispielsweise Chlor, bedeutet,

mit Oxetanalkoholen der Formel (V) 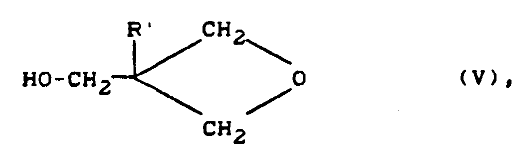
worin
- R': die für die Siloxane der Formel (II) genannte Bedeutung hat,

in Gegenwart säurebindender Mittel, beispielsweise von Triethylamin, N,N-Dimethylanilin oder Natriumacetat und Lösungsmitteln wie Ligroin, Toluol, Tetrahydrofuran oder Diethylether.

### Beispiele

Untersucht wurde ein Copolycarbonat auf Basis von 1,1-Bis-(4-hydroxyphenyl)-3,3,5-trimethylcyclohexan und 2,2-Bis-(4-hydroxyphenyl)-propan in den Molverhältnissen 35:65 mit einer relativen Lösungsviskosität von 1,295 (gemessen in Methylenchlorid bei 25°C und einer Konzentration von 0,5 g/100 ml).

### Erfindungsgemäßer Versuch

- A:: Das obengenannte Copolycarbonat enthielt als Langzeit-Thermostabilisator 0,1 Gew.-% Methyl-tris-(3-ethyloxetanyl-3-methoxy)-silan (II,1).

### Vergleiche

- B:: Das Copolycarbonat enthielt keinen Stabilisator.
- C:: Das Copolycarbonat wurde einmal reextrudiert. Dadurch wurde sichergestellt, daß die gleichen Verarbeitungsschritte wie in A durchgeführt wurden, jedoch ohne Anwesenheit eines Langzeit-Thermostabilisators.

### Alterungsversuche

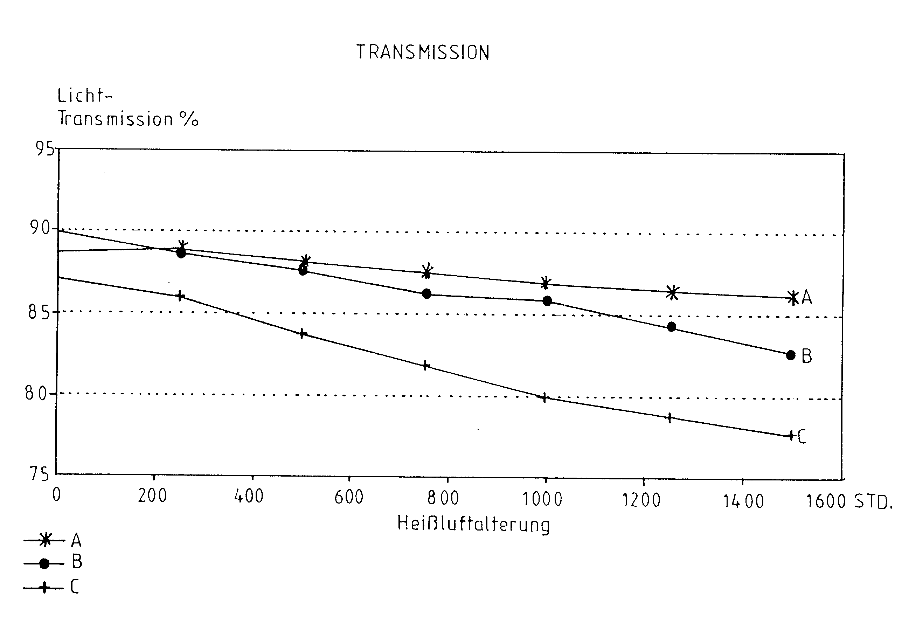

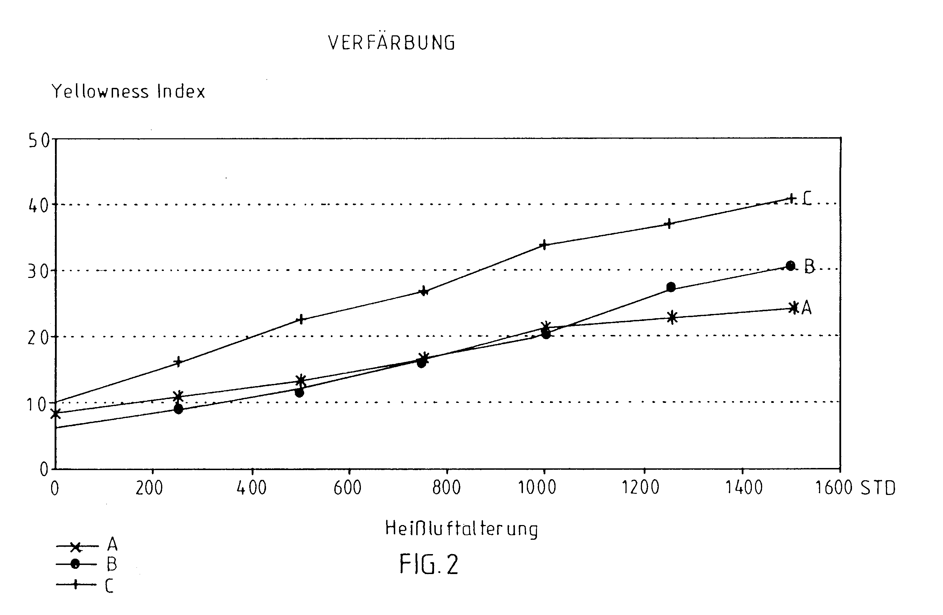

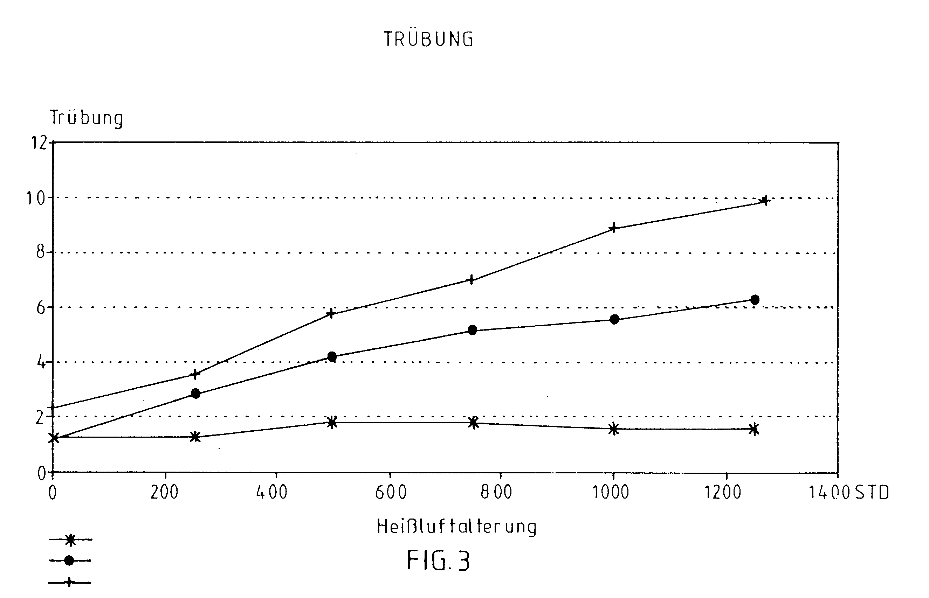

Die Normkleinstäbe aus Polycarbonat gemäß Versuch A, B und C wurden bei 150°C einer Heißluftalterung unterzogen. Die Transmission (Abb. 1) wurde nach DIN 5033 bzw. 4646, Yellowness-Index (Abb. 2) nach ASTM D 1925, die Trübung (Abb. 3) nach DIN 5036 bestimmt.

## Patentansprüche

1. Hochwärmeformbeständige, aromatische Polycarbonate mit Molekulargewichten M̅w (Gewichtsmittel) von mindestens 10.000, vorzugsweise von 10.000 bis 200.000 und insbesondere von 20.000 bis 80.000, die bifunktionelle Carbonatstruktureinheiten der Formel (Ia) 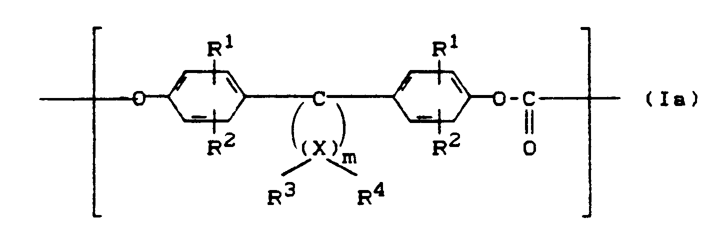 enthalten, worin
R¹ und R² unabhängig voneinander Wasserstoff, Halogen, C₁-C₈-Alkyl, C₅-C₆-Cycloalkyl, C₆-C₁₀-Aryl und C₇-C₁₂-Aralkyl,
m eine ganze Zahl von 4 bis 7,
R³ und R⁴, für jedes X individuell wählbar, unabhängig voneinander Wasserstoff, C₁-C₆-Alkyl und
X Kohlenstoff bedeuten,
mit der Maßgabe, daß an mindestens einem Atom X R³ und R⁴ gleichzeitig Alkyl bedeuten,
enthaltend als alleinigen Thermostabilisator 0,001 bis 1 Gew.-% eines Siloxans der Formel (II) 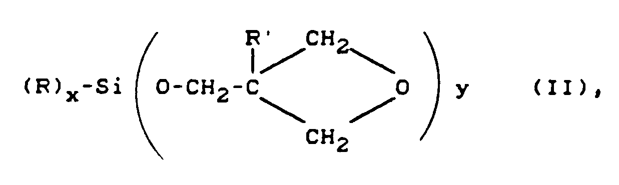 worin
R und R' unabhängig voneinander C₁-C₄-Alkyl oder Aryl und
x und y die Zahlen 1, 2 oder 3 bedeuten und x + y immer gleich 4 ist.

2. Verwendung von Siloxanen der Formel (II) 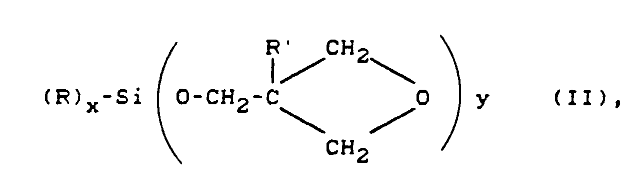 worin
R und R' unabhängig voneinander C₁-C₄-Alkyl und
x und y 1, 2 oder 3 und x + y 4 bedeuten, als alleiniger Thermostabilisator für hochwärmeformbeständige Polycarbonate wie definiert in Anspruch 1.

## Claims

1. High temperature resistant aromatic polycarbonates with molecular weights M̅_{w} (weight average) of at least 10,000, preferably of 10,000 to 200,000 and in particular from 20,000 to 80,000 which contain difunctional carbonate structural units of the formula (Ia) 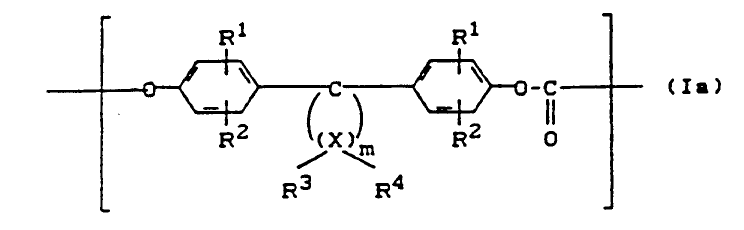 in which
R¹ and R² are mutually independently and are hydrogen, halogen, C₁-C₈ alkyl, C₅-C₆ cycloalkyl, C₆-C₁₀ aryl or C₇-C₁₂ aralkyl,
m is an integer from 4 to 7,
R³ and R⁴, which are individually selectable for each X, are mutually independently and are hydrogen, C₁-C₆ alkyl and
X is
providing that on at least one atom X, R³ and R⁴ simultaneously are alkyl,
containing as sole heat stabiliser 0.001 to 1 wt.% of a siloxane of the formula (II) 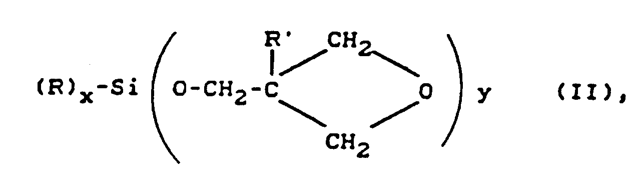 in which
R and R' are mutually independently and are C₁-C₄ alkyl or aryl and
x and y are integers 1, 2 or 3 and x + y is always equal to 4.

2. Use of siloxanes of the formula (II) 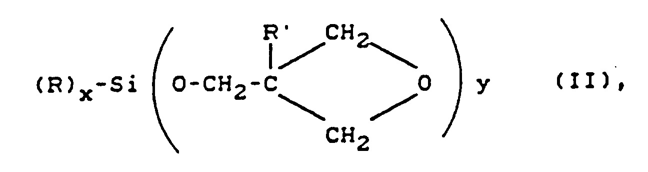 in which
R and R' are mutually independently and are C₁-C₄ alkyl and
x and y are 1, 2 or 3 and x+y is 4, as sole heat stabiliser for high temperature resistant polycarbonates as defined in claim 1.

## Revendications

1. Polycarbonates aromatiques manifestant une résistance élevée contre la déformation à la chaleur, ayant des poids moléculaires M̅w (moyenne pondérale) d'au moins 10.000, de préférence de 10.000 à 200.000, en particulier de 20.000 à 80.000, qui contiennent des unités de structure de carbonate bifonctionnelles répondant à la formule (Ia) 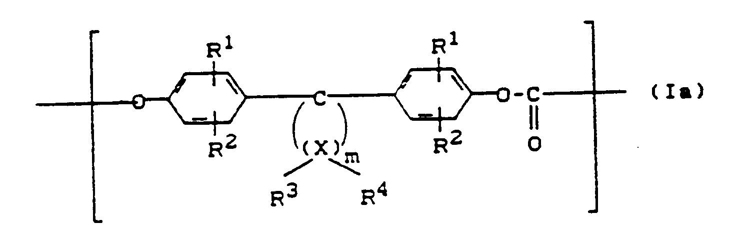 dans laquelle
R¹ et R² représentent, indépendamment l'un de l'autre, un atome d'hydrogène, un atome d'halogène, un groupe alkyle en C₁-C₈, un groupe cycloalkyle en C₅-C₆, un groupe aryle en C₆-C₁₀ et un groupe aralkyle en C₇-C₁₂,
m représente un nombre entier de 4 à 7,
R₃ et R₄, qui peuvent être sélectionnés individuellement pour chaque X, représentent, indépendamment l'un de l'autre, un atome d'hydrogène, un groupe alkyle en C₁-C₆ et
X représente un atome de carbone,
avec cette mesure que, sur au moins un atome X, R³ et R⁴ représentent simultanément un groupe alkyle,
contenant, comme thermostabilisateur unique, de 0,001 à 1% en poids d'un siloxane de formule (II) 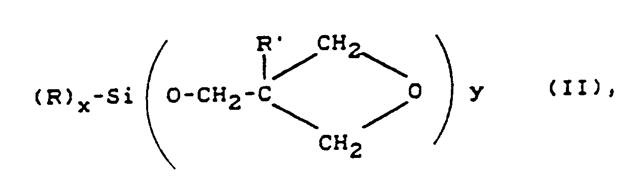 dans laquelle
R et R' représentent, indépendamment l'un de l'autre, un groupe alkyle en C₁-C₄ ou un groupe aryle, et
x et y représentent les nombres 1, 2 ou 3, et x + y est toujours égal à 4.

2. Utilisation de siloxanes de formule (II) 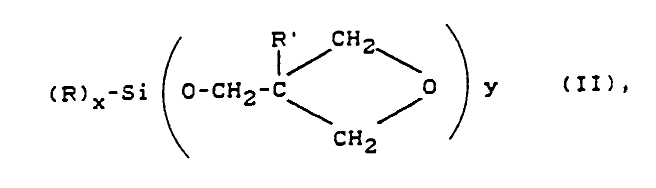 dans laquelle
R et R' représentent, indépendamment l'un de l'autre, un groupe alkyle en C₁-C₄, et
x et y représentent les nombres 1, 2 ou 3, et x + y représente 4, comme thermostabilisateur unique pour des polycarbonates manifestant une résistance élevée contre la déformation à la chaleur, tels que définis à la revendication 1.
